(19)

**Europäisches Patentamt**
**European Patent Office**
**Office européen des brevets**

(11) **EP 2 651 039 A1**

(12) **EUROPEAN PATENT APPLICATION**

(43) Date of publication:
**16.10.2013 Bulletin 2013/42**

(51) Int Cl.:
**H04B 1/00** *(2006.01)*          **H04B 1/52** *(2006.01)*

(21) Application number: **12163902.5**

(22) Date of filing: **12.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventors:
• **Tired, Tobias**
  **SE-226 50 LUND (SE)**

• **Andersson, Stefan**
  **SE-224 79 LUND (SE)**
• **Din, Imad ud**
  **SE-226 42 LUND (SE)**
• **Sjöland, Henrik**
  **SE-246 51 LÖDDEKÖPINGE (SE)**
• **Wernehag, Johan**
  **SE-212 33 MALMÖ (SE)**

(74) Representative: **Ström & Gulliksson AB**
**P.O. Box 793**
**220 07 Lund (SE)**

(54) **Duplexer-less transceiver arrangement, communication device and control method**

(57)     A duplexer-less transceiver arrangement (200, 300, 400, 500, 600, 700, 800, 900) is disclosed. The arrangement comprises a first receiver (202, 302, 402, 502, 602, 702, 802, 902) arranged for frequency-division duplex communication with a wireless communication network; a first transmitter (204, 304, 404, 504, 604, 704, 804, 904, 1404) arranged for frequency-division duplex communication with the wireless communication network; a radio circuit (206, 306, 406, 506, 606, 720, 806, 920) comprising a further receiver and/or a further transmitter; a first antenna (208, 308, 408, 508, 608, 708, 808, 908) connected to the first receiver (202, 302, 402, 502, 602, 702, 802, 902); a second antenna (212, 312, 412, 512, 612, 712, 812, 912) connected to the radio circuit (206, 306, 406, 506, 606, 720, 806, 920); and an arbitrator (216, 316, 416, 516, 616, 716, 816, 916) arranged to coordinate transmission by the first transmitter (204, 304, 404, 504, 604, 704, 804, 904, 1404) and operation by the radio circuit (206, 306, 406, 506, 606, 720, 806, 920) such that the first transmitter is enabled to transmit at least through the second antenna (208, 308, 408, 508, 608, 708, 808, 908). A communication device (1000), methods and a computer program are also disclosed.

Fig. 2

**Description**

<u>Technical field</u>

The present invention generally relates to a duplexer-less transceiver arrangement, a communication device including such duplexer-less transceiver arrangement, and a method of controlling such a duplexer-less transceiver arrangement.

<u>Background</u>

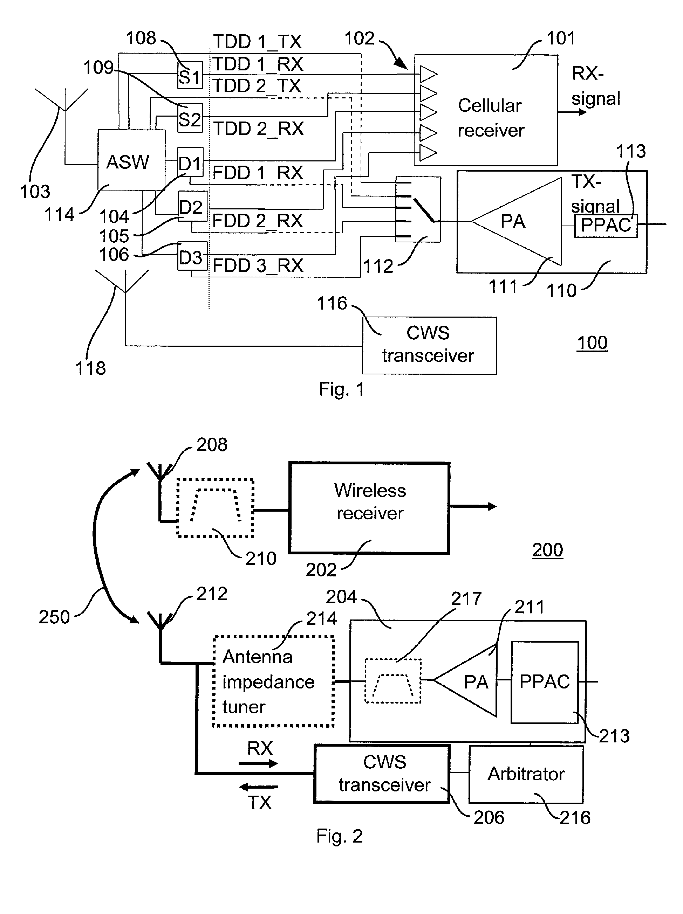

Fig. 1 illustrates an example of a conventional transceiver arrangement 100 being operable for multiple bands. An antenna 103 is arranged for reception and transmission. In a common multiband receiver 101, as for example depicted in Fig. 1, there is one separate Low-Noise Amplifier, LNA, 102 for each frequency band. In each frequency division duplex, FDD, band there is also one duplexer 104, 105, 106 connected to each radio frequency, RF, input required for attenuating the TX signal that leaks into the LNA. The duplexer 104, 105, 106 typically provides some 50-55dB isolation from transmitter, TX, to receiver, RX. The TX leakage into the active LNA is also affected by the leakage through the non-active duplexers and LNAs. The receiver is degraded by the TX-leakage through phase noise, intermodulation generated by receiver non-linearities, as well as TX noise at RX frequencies.

The duplexers add significant cost and also add printed circuit board, PCB, area to the transceiver arrangement. The cost and area increase as the terminals tend to support more frequency bands. However in a frequency division duplex, FDD, radio system receiving and transmitting at the same time they are a necessary part of the transceiver arrangement with the existing technology of today.

The transceiver arrangement 100 can further comprise Surface Acoustic Wave, SAW, filters 108, 109 arranged for Time Division Duplex, TDD, reception to suppress out-of-band interferers. A transmitter 110 of the transceiver arrangement 100 provides a transmit, TX, signal through a power amplifier, PA, 111, via a switch arrangement 112 and the appropriate duplexer 104, 105 or 106, if in FDD communication, and through an antenna switch, ASW, 114 to the antenna 103. The transmitter 110 comprises the PA 111 providing the output signal of the transmitter 110. The transmitter 110 further comprises pre-PA circuitry 113, which may comprise different types of circuitry depending on the type of transmitter.

Terminals of today also commonly support other systems than the main communication system for which the terminal is designed such as a cellular communication system. For example, such other systems can be wireless local area network, WLAN, Global Navigation Satellite System, GNSS, (e.g. Global Positioning System, GPS), and Bluetooth, commonly referred to as Complementary Wireless Systems, CWS, as a generic term. The transceiver arrangement 100 can thus comprise a CWS transceiver 116. These systems commonly all have their own antenna 118.

The TX signal is normally a digitally modulated interferer containing amplitude, AM-, and frequency, FM-, (phase) modulation. The AM-modulation can be represented by a two-tone interferer. Two tones at frequencies $f_1$ and $f_2$ that leak into an LNA and mixer with a second order nonlinearity will generate an intermodulation product at their difference frequency $f_1$-$f_2$ at the mixer output.

With the second order intercept point referred to the LNA input denoted IIP2 and the power of each of the two TX interferers being equal to transmit power, $P_T$, the following applies for the second order intermodulation product referred to the LNA input

$$P_{i\_IM2}(dBm) = 2P_T(dBm) - IIP_2(dBm) \qquad (1)$$

Second order distortion is generated through RF self-mixing of the AM- modulated TX-leakage in the mixer and device mis-match in the differential mixer core, second order nonlinearity in the mixer transconductance stage. Cross modulation will create a second order intermodulation product depending on the third order nonlinearity.

The third order nonlinearity of the LNA and mixer will create an intermodulation product at the RX frequency originating from the TX-leakage into the LNA with power $P_2$ and an interferer at half the duplex distance with power $P_1$. The following applies for the third order intermodulation product $P_{i\_IM3}$ referred to the LNA input.

$$P_{i\_IM3}(dBm) = 2P_1(dBm) + P_2(dBm) - 2IIP_3(dBm) \qquad (2)$$

In an FDD system the TX leakage into the LNA thus needs to be controlled and managed.

Conventional multiband architectures use one duplexer plus one dedicated LNA for each supported frequency band. When the terminal support an increasing number of frequency bands the cost of the sum of the duplexers becomes comparable with the cost of the rest of the transceiver circuit. Duplexer-less solutions have been presented which are based on the principle of balancing the antenna impedance with a dummy impedance. However, also this technique has drawbacks in sense of being sensitive to the ability to track antenna impedance and apply the correct impedance to the dummy impedance load. Further, the dummy impedance load inherently consumes half of the provided output signal which also is a problem.

It is therefore a desire to provide a duplexer-less transceiver arrangement which alleviates at least some of the above demonstrated drawbacks.

## Summary

An object of the invention is to at least alleviate the above stated problem. The present invention is based on the understanding that use of different antennas for transmit and receive operations in a transceiver can provide isolation of the transmit signals from receiver input such that a duplexer-less architecture can be used. The invention is further based on the understanding that a limited number of antennas can be used by proper coordination of operation. The duplexer-less approach is enabled since the receiver or receivers are able to handle a transmit signal at receiver input, i.e. to maintain good performance, when the transmit signal is below a certain signal level, e.g. the compression point level of the LNA. The inventors have also provided advantageous methods for operating such a transceiver arrangement which are based on the understanding that the proposed structure provides versatility for operating efficiently at different operating conditions.

According to a first aspect, there is provided a duplexer-less transceiver arrangement comprising a first receiver arranged for frequency-division duplex communication with a wireless communication network; a first transmitter arranged for frequency-division duplex communication with the wireless communication network; a radio circuit comprising a further receiver and/or a further transmitter; a first antenna connected to the first receiver; a second antenna connected to the radio circuit; and an arbitrator arranged to coordinate transmission by the first transmitter and operation by the radio circuit such that the first transmitter is enabled to transmit at least through the second antenna.

A particular advantage is that the first transmitter is given the possibility, under control of the arbitrator, to transmit through the second antenna, which is present anyway for the radio circuit and thus no additional antenna needs to be provided, when that is suitable. A duplexer between the first receiver and the first transmitter can thus be omitted since transmission through the first antenna can be avoided, e.g. when not suitable, and sufficient isolation and/or cancellation between transmitter signal and receiver signal can be achieved, as will be further elucidated below with reference to the embodiments.

The further radio circuit may comprise a receiver and/or transmitter arranged for communication with other entities than the wireless communication network. Such other entities may be (part of) a Complementary Wireless System, CWS.

The arbitrator may be arranged to schedule operation of the radio circuit to disable operation of elements of the radio circuit at least when the first transmitter is set to transmit at a power level exceeding a first threshold.

An advantage of this is that when the first transmitter causes severe interference to operation of the radio circuit, the operation of the radio circuit may be disabled since its operation at such conditions would do no good anyway. Instead, its operation is scheduled in a structured way and better overall performance can be achieved.

The arbitrator may comprise a switch arranged to connect the output of the first transmitter to the second antenna when the first transmitter is set to transmit at a power level exceeding a second threshold and to connect the output of the first transmitter to the first antenna when the first transmitter is set to transmit at a power level up to the second threshold.

Regarding the radio circuit, a further receiver of the radio circuit may be a second receiver arranged for frequency-division duplex communication with the wireless communication network, wherein the first and second receivers are arranged to jointly operate receive multiple-input and multiple-output, MIMO, communication or receiver diversity.

An advantage is that the first transmitter and the second receiver can share antenna, i.e. the second antenna, and operation is coordinated by the arbitrator for achieving overall efficiency and performance.

The arbitrator may be arranged to disable receive MIMO operation or receiver diversity when the first transmitter is set to transmit at a power level exceeding a first threshold and to enable receive MIMO operation when the output of the first transmitter is set to transmit at a power level up to the first threshold.

The arbitrator may comprise a switch arranged to connect the output of the first transmitter to the second antenna when the first transmitter is set to transmit at a power level exceeding a second threshold and to connect the output of the first transmitter to the first antenna when the first transmitter is set to transmit at a power level up to the second threshold.

The duplexer-less transceiver arrangement may further comprise a third antenna; and a second transmitter arranged for frequency-division duplex communication with the wireless communication network, wherein the first and second transmitters are arranged to jointly operate transmit multiple-input and multiple-output, MIMO, communication or transmitter diversity, wherein the third antenna is connected to the second transmitter.

A particular advantage is that operation of the wireless communication is enabled to be adapted to a current operating situation in sense of MIMO or diversity and transmission levels with a low number of antennas and without using duplexers.

The duplexer-less transceiver arrangement may comprise a second radio circuit comprising a further receiver and/or a further transmitter arranged for communication with other entities than the wireless communication network, wherein the third antenna is connected to the second radio circuit and the arbitrator is further arranged to coordinate transmission by the second transmitter and operation by the second radio circuit such that the second transmitter is enabled to transmit at least through the second antenna. The arbitrator may further be arranged to schedule operation of the second radio circuit to disable operation of the second radio circuit at least when the second transmitter is set to transmit at a power level exceeding a first threshold. The arbitrator may additionally or alternatively comprise a switch arranged to connect the output of the second transmitter to the third antenna when the second transmitter is set to transmit at a power level exceeding a second threshold and to connect the output of the second transmitter to the first antenna when the first transmitter is set to transmit at a power level up to the second threshold.

The duplexer-less transceiver arrangement may comprise a second transmitter arranged for frequency-division duplex communication with the wireless communication network, wherein the first and second transmitters are arranged to jointly operate transmit multiple-input and multiple-output, MIMO, communication or transmit diversity, wherein the first antenna is connected to the second transmitter.

An advantage of this is that operation of the wireless communication is enabled to be adapted to a current operating situation in sense of MIMO or diversity and transmission levels with a very low number of antennas and without using duplexers.

The arbitrator may comprise a switch arranged to connect the output of the first transmitter to the second antenna when the first transmitter is set to transmit at a power level exceeding a second threshold and to connect the output of the first transmitter to the first antenna when the second transmitter is set to transmit at a power level up to the second threshold.

The duplexer-less transceiver arrangement may comprise a second transmitter arranged for frequency-division duplex communication with the wireless communication network, wherein the first and second transmitters are arranged to jointly operate transmit multiple-input and multiple-output, MIMO, communication or transmit diversity, and wherein the duplexer-less transceiver further comprises a third antenna connected to the second transmitter.

A particular advantage of this is that operation of the wireless communication is enabled to be adapted to a current operating situation in sense of transmitter MIMO or diversity and transmission levels with a low number of antennas and without using duplexers. An advantage can be a limited circuit solution for a terminal particularly suitable for applications where uplink performance is important, e.g. for information collection. Another advantage can be a limited circuit solution for a wireless node where transmit MIMO or diversity is important for achieving desired performance.

The arbitrator may be arranged to disable transmit MIMO operation or transmit diversity when the first or second transmitter is set to transmit at a power level exceeding a second threshold and to enable transmit MIMO operation or transmit diversity when the output of the first or second transmitter is set to transmit at a power level up to a second threshold.

The transmitter may comprise an output filter arranged to attenuate an output signal of the transmitter at a frequency of a desired received signal. An advantage of this is improved receiver sensitivity since a noise level caused by the transmitter at the receiving frequency is reduced.

According to a second aspect, there is provided a communication device comprising a duplexer-less transceiver according to the first aspect.

According to a third aspect, there is provided a method of controlling operation of a duplexer-less transceiver comprising a first receiver arranged for frequency-division duplex communication with a wireless communication network, a first transmitter arranged for frequency-division duplex communication with the wireless communication network, a radio circuit comprising a further receiver and/or a further transmitter, a first antenna connected to the first receiver and a second antenna connected to the radio circuit. The method comprises operating the first receiver arranged for frequency-division duplex communication with a wireless communication network; operating the first transmitter arranged for frequency-division duplex communication with the wireless communication network; and coordinating transmission by the first transmitter and operation by the radio circuit such that the first transmitter is enabled to transmit at least through the second antenna.

The coordination may include scheduling of operation of the radio circuit, wherein the scheduling includes disabling operation of elements of the radio circuit when the first transmitter is set to transmit at a power level exceeding a first threshold.

The coordination may additionally or alternatively include controlling a switch arranged to connect the output of the first transmitter to either the first antenna or to the second antenna, wherein the controlling includes causing connection of the output of the first transmitter, when the first transmitter is set to transmit at a power level exceeding a second threshold, to the second antenna, and causing connection of the output of the first transmitter to the first antenna when the first transmitter is set to transmit at a power level up to the second threshold.

Where a further receiver of the radio circuit is a second receiver arranged for frequency-division duplex communication with the wireless communication network, wherein the first and second receivers are arranged to jointly operate receive multiple-input and multiple-output, MIMO, communication or receiver diversity, the method may further comprise disabling receive MIMO operation or receiver diversity when the first transmitter is set to transmit at a power level exceeding a first threshold and enabling receive MIMO operation when the output of the first transmitter is set to transmit at a power level up to the first threshold.

Where the duplexer-less transceiver further comprises a third antenna, and a second transmitter arranged for frequency-division duplex communication with the wireless communication network, wherein the first and second transmitters are arranged to jointly operate transmit multiple-input and multiple-output, MIMO, communication or transmitter diversity, a second radio circuit comprising a further receiver and/or a further transmitter arranged for communication with other entities than the wireless communication network, wherein the third antenna is connected to the second radio circuit and to the second transmitter, the method may further comprise disabling operation of the second radio circuit when the second transmitter is set to transmit at a power level exceeding a first threshold.

Where the duplexer-less transceiver further comprises a switch arranged to connect the output of the first transmitter either to the first antenna or to the second antenna, the method may further comprise controlling the switch by causing connection of the output of the first transmitter to the second antenna when the first transmitter is set to transmit at a power level exceeding a second threshold and to connect the output of the first transmitter to the first antenna when the second transmitter is set to transmit at a power level up to the second threshold.

The method may further comprise disabling transmit MIMO operation or transmit diversity when the first or second transmitter is set to transmit at a power level exceeding a second threshold and enabling transmit MIMO operation or transmit diversity when the output of the first or second transmitter is set to transmit at a power level up to a second threshold.

Advantages of the third aspect are the enabling of versatility of operation of a duplexer-less transceiver as of the first aspect in sense of adaptation to different operation scenarios.

According to a fourth aspect, there is provided a computer program comprising computer-executable code with program instructions, which when executed on a processor of a transceiver arrangement causes the transceiver arrangement to perform the method according to the third aspect.

The wireless communication network may be a cellular communication network providing coverage over a wide geographic area by a multitude of network nodes and providing mobility to a terminal being in communication with the cellular communication network.

Other objectives, features and advantages of the present invention will appear from the following detailed disclosure, from the attached dependent claims as well as from the drawings. Generally, all terms used in the claims are to be interpreted according to their ordinary meaning in the technical field, unless explicitly defined otherwise herein. All references to "alan/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

Brief description of the drawings

The above, as well as additional objects, features and advantages of the present invention, will be better understood through the following illustrative and non-limiting detailed description of preferred embodiments of the present invention, with reference to the appended drawings.

Fig 1 illustrates an example of a conventional transceiver arrangement employing duplexers and surface acoustic wave filters, and being operable for multiple bands.
Figs 2 to 9 schematically illustrate, respectively, a transceiver arrangement according to embodiments.
Fig. 10 is a block diagram schematically illustrating a communication device according to an embodiment.
Fig. 11 is a flow chart schematically illustrating a method according to an embodiment.
Fig. 12 is a flow chart schematically illustrating a method according to an embodiment.
Fig. 13 schematically illustrates a non-transitory computer readable medium with a computer program stored thereon, and a processing device for executing the computer program.
Fig. 14 schematically illustrates a setup where two transmitters are used.
Fig. 15 schematically illustrates relations between transmitted and received signals when transmitter signal leakage into receiver is not handled.

Detailed description

In an exemplary FDD radio communication system, e.g. WCDMA, the maximum transmit TX output signal may be +24 dBm at the antenna. Approximating 2 dB loss from the transmitter PA via a duplexer to the antenna, the transmitter output can be +26dBm. In duplexer solutions, the duplexer attenuates the TX signal about 50 to 55 dB from TX to receiver. Assuming 52 dB attenuation, the TX signal will be about - 26dBm at the LNA input of the receiver. Considering now a duplexer-less solution without the inventive measures described below, the TX power at the LNA input would be a voltage level that the LNA cannot manage without compressing the signal. If the loss in the antenna switch is approximated to 0.5 dB, the PA output is approximately 24.5 dBm, which will also be the input of TX signal to the LNA. Such a signal level cannot be linearly handled by the LNA. Thus, some isolation is needed for such situations, i.e. worst case TX situation.

By using different antennas for TX and RX, an isolation of about 15 dB can be expected, although this can be very different depending on how the two antennas are arranged. The antenna isolations, or electromagnetic cross-connections if seen in that way, are illustrated in the drawings as mutual arrows 250, 350, 450, 452, 550, 552, 554 650, 652, 750, 850, 852, 950 between the antennas. In small communication apparatuses, the antenna arrangement possibilities are of course more limited than if a larger space is available and form constraints are not limiting the placement of antennas. Furthermore, it is not always feasible to provide an extra antenna for isolation purposes only, e.g. due to cost, space, etc. However, one or more further antennas are normally available. It can be antennas that are used for diversity or multiple- input- multiple- output, MIMO, solutions, or antennas used for complementary wireless systems, CWS, such as for wireless local area network transceivers, close- range radio systems, or global navigation satellite system, GNSS, receivers. Thus, extra antennas may not be necessary to be added, and by proper use of existing antennas, a duplexer- less solution can be achieved. Thus, the calculation example can be resumed. By the 15 dB isolation, the TX signal is +24- 15=+9 dBm at the RX antenna. By for example using a band- pass filter between the RX antenna and the LNA, it is feasible to provide further 9 dB attenuation. The TX signal at the LNA input is then +9- 9=0dBm. The TX signal at the LNA is now at a level where the LNA is able to linearly manage the signal, and the rest of the cancelling of the TX signal can be managed by conventional TX signal cancelling in the receiver, for example as described in "Adaptive Duplexer for Software Radio" by Kannangara, S.D., PhD Thesis from Victoria University, 2006, see especially chapters 6 to 8, and hereafter referred to as 'Kannangara'.

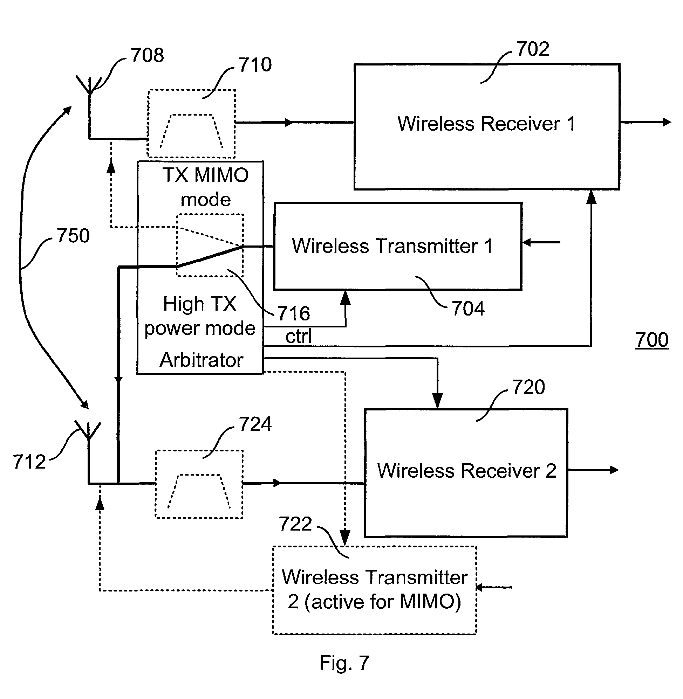

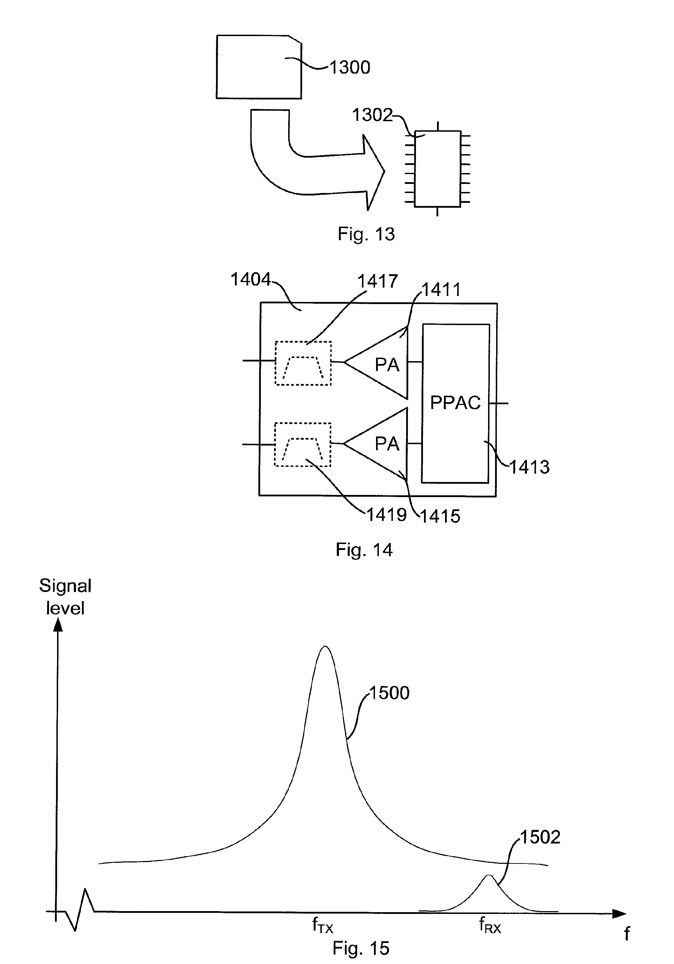

Fig. 15 schematically illustrates relations between transmitted 1500 and received 1502 signals when transmitter signal leakage into receiver is not handled. See also for comparison figure 7-13 of Kannangara. From this relation, the problem of the overall high level of the transmit signal, particularly at the transmit frequency $f_{TX}$, which the LNA is not able to linearly manage. As indicated above, and further described below, this compression problem can be handled in a duplexer-less transceiver according to the approaches of the invention. From the relation illustrated in Fig. 15, it can also be seen that the noise caused at the receiving frequency $f_{RX}$ causes sensitivity problems, which can be solved as described in Kannangara. Below, further suggestions to solve the sensitivity problem caused by the transmitter noise are put forward.

The attenuation of the cellular transmit signal provided by the separate TX and RX antennas can be used to strongly relax requirements on Q-value of a tuneable bandpass filter between the RX antenna and the LNA. Below is an example of Q-value relaxation for a second order bandpass filter elucidated for an exemplary FDD situation for the understanding of the principles given in this disclosure. It is readily understood that other implementations of filters, where needed, may be applicable.

The filter has a voltage transfer function

$$\left| H(j\omega) \right| = \frac{|K|}{\sqrt{1 + Q^2 (\frac{\omega_0}{\omega} - \frac{\omega}{\omega_0})^2}}$$

With separate antennas and at maximum cellular transmit output power, the filter should provide attenuation, as elucidated above, of 9dB. In linear scale, 9 dB power attenuation corresponds to

$$10^{\frac{-9}{10}}$$

Using $U=\sqrt{P \cdot R},$ this corresponds to an attenuation, A, of $\sqrt{10^{\frac{-9}{10}}}$ in voltage.

$$A = \frac{|H(j\omega)|}{|K|} = \frac{1}{\sqrt{1+Q^2(\frac{\omega_0}{\omega}-\frac{\omega}{\omega_0})^2}}$$

In the exemplary FDD situation, the centre RX frequency is at 2140 MHz and the TX frequency is at 1950 MHz. Solving out Q gives in this example Q=14 for the setup with separate antennas. As a comparison, if a single common antenna was used for RX and TX, i.e. the filter would need to provide 24 dB attenuation, would give us a required Q-value of 85. Here, feasible Q-values for normal integrated circuits for radio applications, i.e. on-chip solutions, are up to about 25.

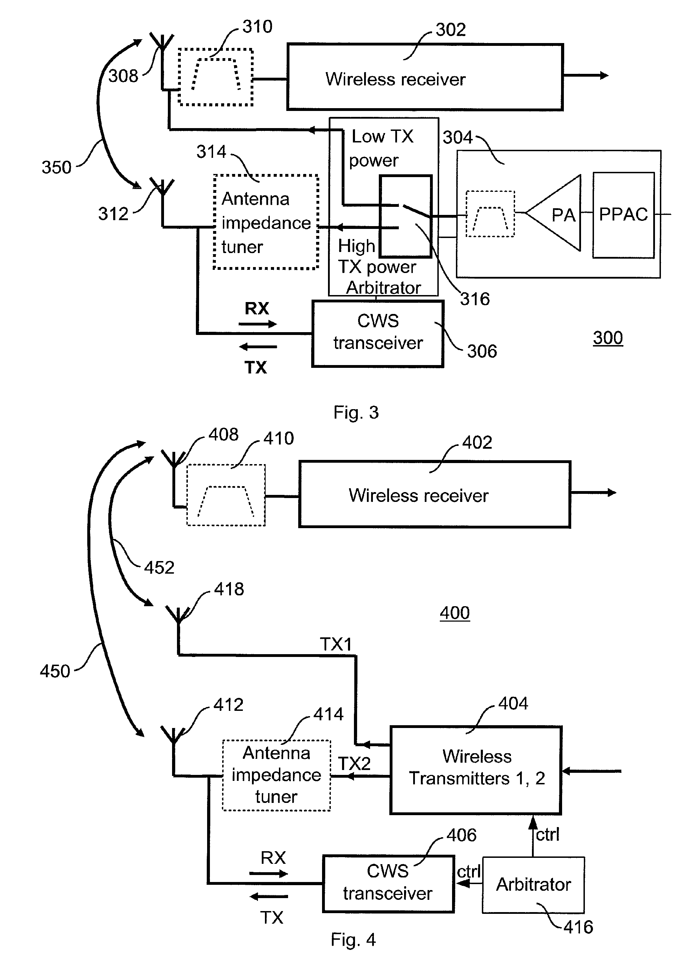

Fig. 2 schematically illustrates a transceiver arrangement 200 according to an embodiment including a receiver 202 and a transmitter 204 arranged for FDD communication with a cellular communication network, i.e. to receive and transmit radio signals from and to, respectively, a network node of the cellular communication network. The transmitter 204 comprises a power amplifier (PA) 211 providing the output signal of the transmitter 204. The transmitter 204 further comprises pre-PA circuitry 213, which may comprise different types of circuitry depending on the type of transmitter. The transmitter optionally also includes an output filter 217. This filter 217 is arranged to reduce the transmit signal at the frequency $f_{RX}$ of the received signal. This filter 217 can thus be used to alleviate the sensitivity problem discussed above. The filter 217 can include inductive and capacitive elements, thus commonly called LC-filter. An advantage of an LC-filter is that it is cheap and can be suitable for integration in integrated circuits. The filter can also be a Surface Acoustic Wave, SAW, or a Bulk Acoustic Wave, BAW, filter. Advantages of these SAW and BAW filters are that they provide a high attenuation at desired frequencies. Other filters can also be used to reduce the transmitter output signal at the frequency $f_{RX}$ of the received signal. The receiver 202 can comprise features for reducing noise caused by the transmitter 204 as demonstrated above. The transceiver arrangement also includes a radio circuit 206 comprising a further receiver and/or transmitter arranged for CWS operation. In Fig. 2 (as well as in Figs 3 to 6 and 8), the radio circuit 206 is illustrated as being capable of both reception, RX, and transmission, TX, but can for example be arranged for RX only, e.g. when being a GNSS receiver.

The transceiver arrangement 200 comprises a first antenna 208 which is connected to the receiver 202, optionally via a filter arrangement 210 which can be a bandpass filter for providing signals within the receiving frequency to the receiver 202. The filter can be tuneable for enabling reception at assigned frequency.

The transceiver arrangement 200 also comprises a second antenna 212 connected to the radio circuit 206 for supporting CWS communication through the antenna 212.

The transmitter 204 is arranged to transmit through the second antenna 212, and can optionally be connected to the second antenna 212 via an antenna impedance tuner 214. An arbitrator 216 is preferably arranged to coordinate transmission by the transmitter 204 and operation by the radio circuit 206 such that the transmitter 204 is enabled to transmit through the second antenna. This coordination can be based on transmissions of the transmitter 204 and on the priority or presence of operation of the radio circuit 206. For example, when the transmitter 204 needs to transmit, the radio circuit 206 may be disabled or at least adapted, e.g. to increased robustness of CWS signal schemes, during those transmissions.

Considering the impact of a signal transmitted from the CWS transceiver on the wireless receiver 202 when for example CWS operation being Wi-Fi operating at 5.8 GHz and the cellular operation is performed such that a third harmonic of the Wi-Fi signal appears in the operating band of cellular band II at 1933 MHz, i.e. 5.8 GHz/3, scheduling of the CWS transceiver can also take this into consideration.

Fig. 3 schematically illustrates a transceiver arrangement 300 according to an embodiment including a receiver 302 and a transmitter 304 arranged for FDD communication with a cellular communication network, i.e. to receive and transmit radio signals from and to, respectively, a network node of the cellular communication network. The transmitter 304 can have similar properties as those demonstrated with reference to Fig. 2, including the optional output filter. The receiver 302 can comprise features for reducing noise caused by the transmitter 304 as demonstrated above. The transceiver arrangement also includes a radio circuit 306 comprising a further receiver and/or transmitter arranged for CWS operation.

The transceiver arrangement 300 comprises a first antenna 308 which is connected to the receiver 302, optionally via a filter arrangement 310 which can be a bandpass filter for providing signals within the receiving frequency to the receiver 302. The filter can be tuneable for enabling reception at assigned frequency.

The transceiver arrangement 300 also comprises a second antenna 312 connected to the radio circuit 306 for supporting CWS communication through the antenna 312.

The transmitter 304 is arranged to transmit through the second antenna 312 or through the first antenna 308 by an arbitrator including a switch 316. Thus, the switch 316 either connects the output of the transmitter 304 to the first antenna 308 or to the second antenna 312. The transmitter can optionally be connected to the second antenna 312 via an antenna impedance tuner 314. The arbitrator can also be arranged to coordinate transmission by the transmitter 304 and operation by the radio circuit 306 when the transmitter 304 is enabled to transmit through the second antenna similar to what is demonstrated with reference to Fig. 2.

Thus, when the transmitter 304 is set to transmit at a power level up to a threshold where the receiver 302 is capable of blocking the TX signal, the switch 316 can connect the output of the transmitter 304 to the first antenna 308. Any TX leakage into the input of the receiver 302 will then be handled by the receiver, and also by the optional bandpass filter 310. The latter is feasible since there is a distance in frequency between received signal and transmitted signal in FDD.

If the transmitter is set to transmit at a power level above the threshold, the switch 316 connects the output of the transmitter 304 to the second antenna 312. The proper isolation between TX and RX signals is then achieved as demonstrated above.

Fig. 4 schematically illustrates a transceiver arrangement 400 according to an embodiment including a receiver 402 and a transmitter arrangement 404 arranged for FDD communication with a cellular communication network, i.e. to receive and transmit radio signals from and to, respectively, a network node of the cellular communication network. The transmitter arrangement 404 comprises a first transmitter and a second transmitter arranged to jointly operate transmit MIMO or diversity. An example of such a transmitter arrangement 1404 is schematically illustrated in Fig. 14, where the two transmitters may share pre-PA circuitry 1413, which in addition to the features demonstrated with reference to the transmitter of Fig. 2 also can provide such features as pre-coding for the different signals provided to the respective antenna. The arrangement 1404 comprises one PA 1411, 1415 for respective transmitter. Optionally, the transmitter arrangement 1404 can also comprise output filters 1417, 1419 for the respective transmitter. The filters 1417, 1419 can have similar construction as demonstrated for the transmitter of Fig. 2 and fulfil the same purpose. Returning to Fig. 4, the transceiver arrangement 400 also includes a radio circuit 406 comprising a further receiver and/or transmitter arranged for CWS operation.

The transceiver arrangement 400 comprises a first antenna 408 which is connected to the receiver 402, optionally via a filter arrangement 410 which can be a bandpass filter for providing signals within the receiving frequency to the receiver 402. The filter can be tuneable for enabling reception at assigned frequency. The receiver 402 can comprise features for reducing noise caused by the transmitter 404 as demonstrated above.

The transceiver arrangement 400 also comprises a second antenna 412 connected to the radio circuit 406 for supporting CWS communication through the antenna 412.

The transceiver arrangement 400 further comprises a third antenna 418 arranged for transmit MIMO or diversity and is connected to one of the transmitters of the transmitter arrangement 404. Thus, one of the transmitters of the transmitter arrangement 404 is arranged to transmit through the second antenna 412 and the other transmitter of the transmitter arrangement 404 is arranged to transmit through the third antenna 418. The transmitter can optionally be connected to the second antenna 412 via an antenna impedance tuner 414. An arbitrator 416 can also be arranged to coordinate transmission by the transmitter and operation by the radio circuit 406 such that the transmitter is enabled to transmit through the second antenna similar to what is demonstrated with reference to Fig. 2. Here, in addition to the examples given with reference to Fig. 2, and also applicable to examples given below, the priority between transmit MIMO or diversity and operation of the CWS transceiver (or receiver) can be selected such that the arbitrator 416, when transmit power level is so high that it is not feasible to transmit over the second antenna 412 by the transmitter arrangement and operate the CWS transceiver, either disables transmit MIMO or diversity, or disables the operation by the CWS transceiver. The arbitration can also comprise assigning a maximum signal output level of the CWS transceiver for e.g. avoiding interfering with the wireless receiver(s).

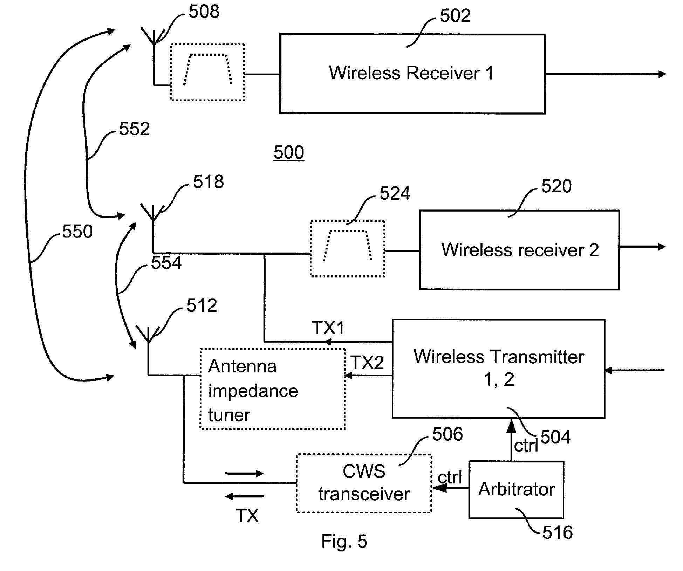

Fig. 5 schematically illustrates a transceiver arrangement 500 according to an embodiment. Many elements correspond to those demonstrated in Fig. 4, which are therefore not repeated here. However, the transceiver arrangement 500 also comprises a second receiver 520 arranged for FDD communication with a cellular communication network, i.e. to receive radio signals from a network node of the cellular communication network and to jointly operate receive MIMO or diversity with a first receiver 502. The second receiver 520 is connected to the third antenna 518, optionally via a filter 524 such as a bandpass filter similar to those demonstrated for receiver input filtering above for suppressing TX signal before reaching the LNA of the receiver. Furthermore, the second antenna 512 can be an antenna both used for CWS and transmission (diversity or MIMO) to the cellular network, as in the embodiment demonstrated with reference to Fig.

4, but can also be a transmit antenna only. Thus, the CWS transceiver 506 is optional.

An arbitrator 516 can here coordinate RX MIMO or diversity with TX MIMO or diversity, and also CWS transceiver operation, based on actual priority for the operations as well as transmit power level. A number of feasible situations and their arbitration are of course possible, but a few will be discussed here:

- Say if RX MIMO is required to achieve best available downlink performance, and the transmit power level is moderate, e.g. due to being fairly close to the network node, then TX MIMO can be enabled, and CWS transceiver can operate. Say now that distance to the network node increases, RX MIMO is still required, and the transmit power level increases to a level where the transmitter sharing antenna with the second receiver 520 cannot be cancelled in the second receiver. The arbitrator 516 then disables TX MIMO and transmission is only performed over the second antenna 512. Depending on the transmit power level, the CWS transceiver operation may in such case also be disabled or adapted.
- Say if RX MIMO is not required but preferred, the transmit power level is moderate, e.g. due to being fairly close to the network node, then both RX and TX MIMO can be enabled, and CWS transceiver can operate. Say now that distance to the network node increases, RX MIMO is still not required, and the transmit power level increases to a level where the transmitter sharing antenna with the second receiver 520 cannot be cancelled in the second receiver. The CWS operation, e.g. GPS reception, is however for the moment prioritized. The arbitrator 516 then disables RX and TX MIMO and transmission is only performed over the third antenna 518, reception at the first antenna 508, and the CWS operation can be performed over the second antenna 512.

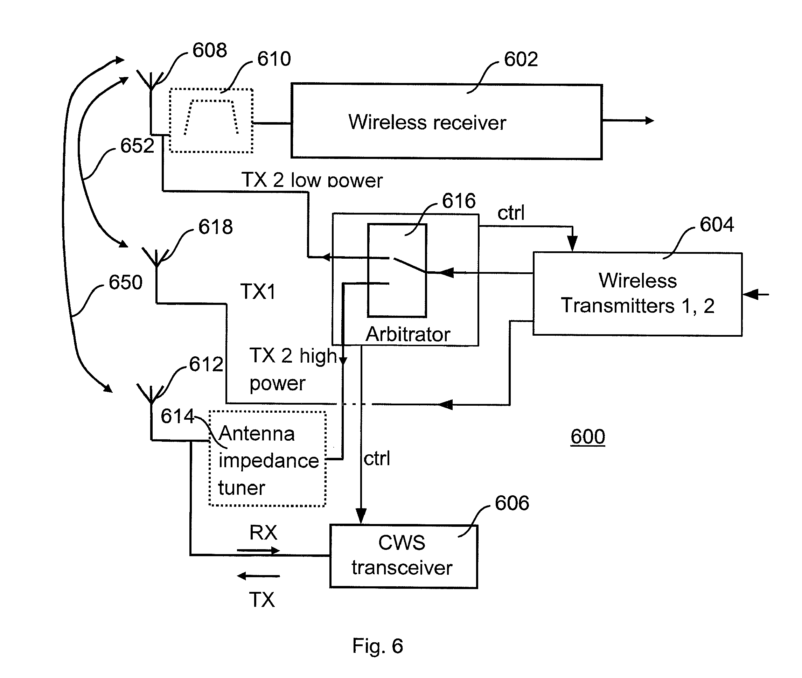

Fig. 6 schematically illustrates a transceiver arrangement 600 according to an embodiment. The transceiver arrangement includes a receiver 602 and a transmitter arrangement 604 arranged for FDD communication with a cellular communication network, i.e. to receive and transmit radio signals from and to, respectively, a network node of the cellular communication network, where the transmitter arrangement comprises a first and a second transmitter arranged to jointly operate TX MIMO or diversity. The transmitter arrangement 604 can have properties as those demonstrated for the transmitter arrangement of Fig. 4, which properties are therefore not repeated here. The transceiver arrangement 600 also includes a radio circuit 606 comprising a further receiver and/or transmitter arranged for CWS operation.

The transceiver arrangement 600 comprises a first antenna 608 which is connected to the receiver 602, optionally via a filter arrangement 610 which can be a bandpass filter for providing signals within the receiving frequency to the receiver 602. The filter 610 can be tuneable for enabling reception at assigned frequency. The receiver 602 can comprise features for reducing noise caused by the transmitter 604 as demonstrated above.

The transceiver arrangement 600 also comprises a second antenna 612 connected to the radio circuit 606 for supporting CWS communication through the antenna 612. A third antenna 618 is arranged for TX MIMO or diversity and is connected to one of the transmitters of the transmitter arrangement 604. The other transmitter of the transmitter arrangement 604 is arranged to transmit through the second antenna 612 or through the first antenna 608 by an arbitrator including a switch 616. Thus, the switch 616 either connects the output of the transmitter to the first antenna 608 or to the second antenna 612. The transmitter can optionally be connected to the second antenna 612 via an antenna impedance tuner 614. The arbitrator can also be arranged to coordinate transmission by the transmitter 604 and operation by the radio circuit 606 when the transmitter 604 is enabled to transmit through the second antenna 612 similar to what is demonstrated with reference to Figs 2 and 3. Arbitration of TX MIMO or diversity operation and CWS operation can also be performed similar to what has been demonstrated with reference to Figs 4 and 5.

Thus, when the transmitter is set to transmit at a power level up to a threshold where the receiver 602 is capable of blocking the TX signal, the switch 616 can connect the output of the transmitter to the first antenna 608. Any TX leakage into the input of the receiver 602 will then be handled by the receiver, and also by the optional bandpass filter 610. The latter is feasible since there is a distance in frequency between received signal and transmitted signal in FDD.

If the transmitter is set to transmit at a power level above the threshold, the switch 616 connects the output of the transmitter to the second antenna 612. The proper isolation between TX and RX signals is then achieved as demonstrated above.

Similarly, TX MIMO or diversity can be disabled at high TX power levels and reception can be performed on the first antenna 608, transmission be performed on the third antenna 618, and CWS operation be performed on the second antenna 612. Alternatively, TX MIMO or diversity can be enabled over the second and third antennas 612, 618 and CWS operation can be disabled or adapted.

Fig. 7 schematically illustrates a transceiver arrangement 700 according to an embodiment. The transceiver arrangement 700 includes a first receiver 702 and a first transmitter 704 arranged for FDD communication with a cellular communication network, i.e. to receive and transmit radio signals from and to, respectively, a network node of the cellular communication network. The transceiver arrangement 700 also includes a second receiver 720 arranged for FDD communication with the cellular communication network, wherein the first and second receivers 702, 720 are arranged to jointly operate RX MIMO or diversity. The transceiver arrangement 700 can further include a second transmitter 722 where the first and second transmitters 704, 722 can be arranged to jointly operate TX MIMO or diversity.

The transceiver arrangement 700 comprises a first antenna 708 which is connected to the first receiver 702, optionally via a filter arrangement 710 which can be a bandpass filter for providing signals within the receiving frequency to the receiver 702. The filter can be tuneable for enabling reception at assigned frequency.

The transceiver arrangement 700 also comprises a second antenna 712 which is connected to the second receiver 720, optionally via a filter arrangement 724 which can be a bandpass filter for providing signals within the receiving frequency to the receiver 702. The filter can be tuneable for enabling reception at assigned frequency.

The first transmitter 704 is arranged to transmit through the second antenna 712 or, optionally, through the first antenna 708 by an arbitrator including a switch 716. Thus, the switch 716 either connects the output of the first transmitter 704 to the first antenna 708 or to the second antenna 712. The arbitrator can also be arranged to coordinate transmission by the first transmitter 704 and operation in RX and/or TX MIMO or diversity. Thus, when the first transmitter 704 can be set to transmit at a power level up to a threshold where the receiver 702 is capable of handling the TX signal, the switch 716 can connect the output of the first transmitter 704 to the first antenna 708. Any TX leakage into the input of the receiver 702 will then be handled by the first receiver 702, and also by the optional bandpass filter 710. The latter is feasible since there is a distance in frequency between received signal and transmitted signal in FDD. In case the first transmitter 704 is transmitting through the first antenna 708, TX MIMO or diversity can be enabled, and the second transmitter 722 can be enabled to transmit through the second antenna 712. If RX MIMO is enabled simultaneously, TX signal blocking is handled in the second receiver 720 similar to the handling in the first receiver 720, i.e. this is only possible at sufficiently low TX power level. If the first transmitter 704 is set to transmit at a power level above the threshold, the switch 716 can connect the output of the first transmitter 704 to the second antenna 712. The proper isolation between TX and RX signals is then achieved as demonstrated above. Similarly, if the first transmitter 704 is set to transmit at a power level above the threshold through the second antenna 712, RX MIMO or diversity is disabled. The transmitter 704 can have the properties demonstrated for the transmitter of Fig. 2.

Considering the calculation example in the beginning of the detailed description, i.e. TX suppression of 9 dB in bandpass filter and the receiver being able to handle TX signals up to 0 dBm, the threshold for TX power level becomes +9 dBm. For other filter and/or receiver configurations, the threshold can of course be chosen differently.

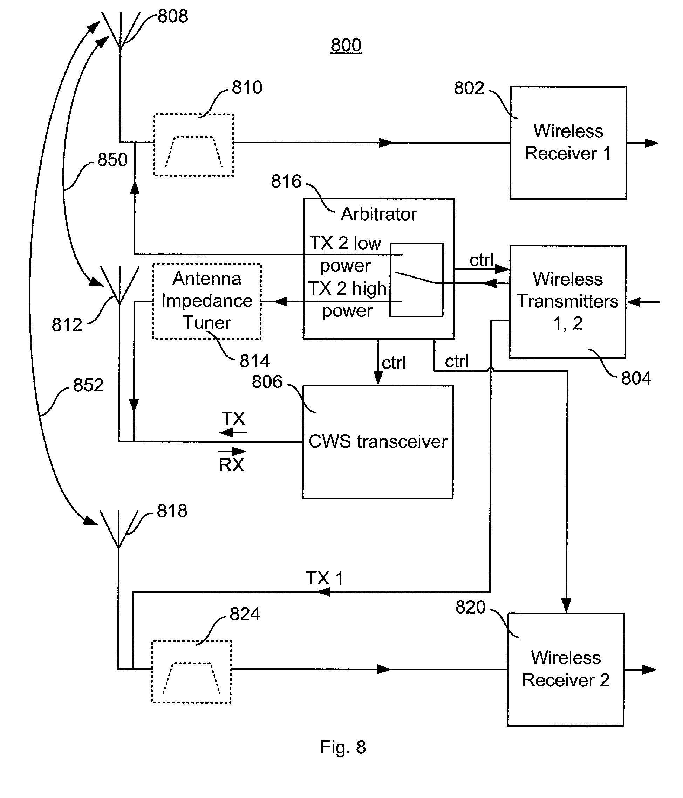

Fig. 8 schematically illustrates a transceiver arrangement 800 according to an embodiment. The transceiver arrangement includes a first receiver 802 and a transmitter arrangement 804 arranged for FDD communication with a cellular communication network, i.e. to receive and transmit radio signals from and to, respectively, a network node of the cellular communication network, where the transmitter arrangement comprises a first and a second transmitter arranged to jointly operate TX MIMO or diversity. The transmitter arrangement 804 can have properties as those demonstrated for the transmitter arrangement of Fig. 4, which properties are therefore not repeated here. The transceiver further comprises a second receiver 820 arranged for FDD communication with a cellular communication network, wherein the first and a second receivers 802, 820 are arranged to jointly operate RX MIMO or diversity. The receivers 802, 820 can have noise reduction features as those demonstrated above. The transceiver arrangement 800 also includes a radio circuit 806 comprising a further receiver and/or transmitter arranged for CWS operation.

The transceiver arrangement 800 comprises a first antenna 808 which is connected to the first receiver 802, optionally via a filter arrangement 810 which can be a bandpass filter for providing signals within the receiving frequency to the first receiver 802. The filter 810 can be tuneable for enabling reception at assigned frequency.

The transceiver arrangement 800 also comprises a second antenna 812 connected to the radio circuit 806 for supporting CWS communication through the antenna 812. A third antenna 818 is arranged for TX and/or RX MIMO or diversity and is connected to one of the transmitters of the transmitter arrangement 804 and to the second receiver 820, optionally via a filter arrangement 824 similar to the filter arrangement 810 for the first receiver 810. The other transmitter of the transmitter arrangement 804 is arranged to transmit through the second antenna 812 or through the first antenna 808 by an arbitrator including a switch 816. Thus, the switch 816 either connects the output of the transmitter to the first antenna 808 or to the second antenna 812. The transmitter can optionally be connected to the second antenna 812 via an antenna impedance tuner 814. The arbitrator can also be arranged to coordinate transmission by the transmitter 804 and operation by the radio circuit 806 when the transmitter 804 is enabled to transmit through the second antenna 812, and also coordinate TX and RX MIMO or diversity operation. Arbitration of TX and RX MIMO or diversity operation and CWS operation can be performed similar to what has been demonstrated above.

Thus, when the transmitter is set to transmit at a power level up to a threshold where the receiver 802 is capable of blocking the TX signal, the switch 816 can connect the output of the transmitter to the first antenna 808. Any TX leakage into the input of the receiver 802 will then be handled by the receiver, and also by the optional bandpass filter 810. The latter is feasible since there is a distance in frequency between received signal and transmitted signal in FDD.

If the transmitter is set to transmit at a power level above the threshold, the switch 816 connects the output of the transmitter to the second antenna 812. The proper isolation between TX and RX signals is then achieved as demonstrated above.

Similarly, TX MIMO or diversity can be disabled at high TX power levels and reception can be performed on the first antenna 808, transmission be performed on the third antenna 818, and CWS operation be performed on the second antenna 812. Alternatively, TX MIMO or diversity can be enabled over the second and third antennas 812, 818 and CWS operation can be disabled or adapted. Further alternatively, RX MIMO or diversity can be enabled at the first and third antennas 808, 818 and cellular transmission can be performed over the second antenna 812 while CWS operation can be disabled or adapted.

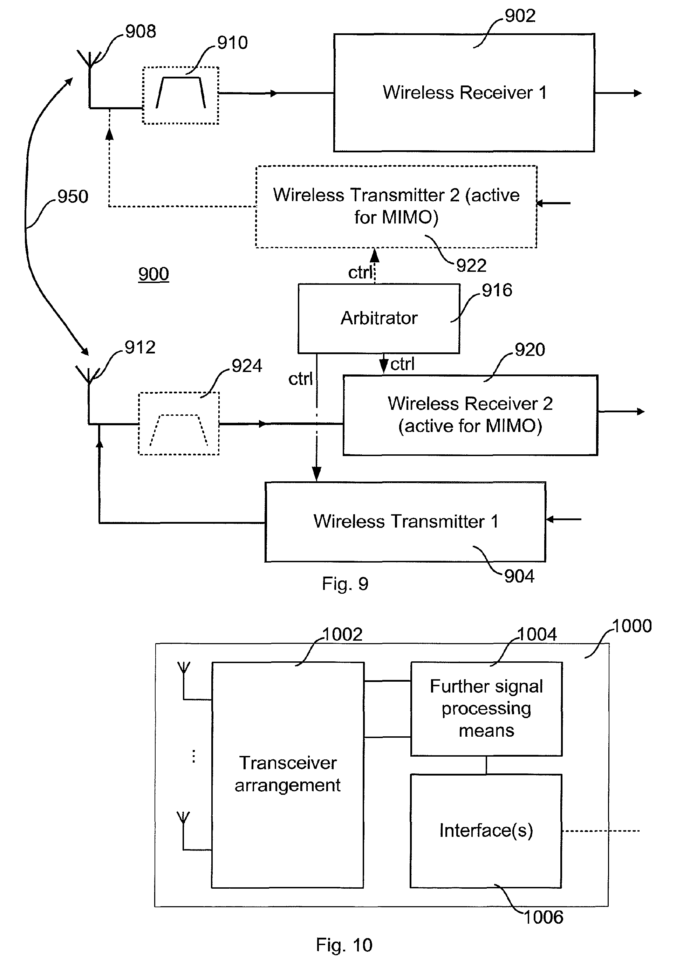

Fig. 9 schematically illustrates a transceiver arrangement 900 according to an embodiment. The transceiver arrangement 900 includes a first receiver 902 and a first transmitter 904 arranged for FDD communication with a cellular communication network, i.e. to receive and transmit radio signals from and to, respectively, a network node of the cellular communication network. The transceiver arrangement 900 also includes a second receiver 920 arranged for FDD communication with the cellular communication network, wherein the first and second receivers 902, 920 are arranged to jointly operate RX MIMO or diversity. The transceiver arrangement 900 can further include a second transmitter 922 where the first and second transmitters 904, 922 can be arranged to jointly operate TX MIMO or diversity. The receivers 902, 920 and the transmitters 904, 922 can have properties as those demonstrated for the receiver and transmitter of Fig. 2, respectively.

The transceiver arrangement 900 comprises a first antenna 908 which is connected to the first receiver 902, optionally via a filter arrangement 910 which can be a bandpass filter for providing signals within the receiving frequency to the receiver 902. The filter can be tuneable for enabling reception at assigned frequency.

The transceiver arrangement 900 also comprises a second antenna 912 which is connected to the first transmitter 904 and to the second receiver 920, optionally via a filter arrangement 924 which can be a bandpass filter for providing signals within the receiving frequency to the receiver 902. The filter can be tuneable for enabling reception at assigned frequency.

The first transmitter 904 is arranged to transmit through the second antenna 912. An arbitrator 916 can be arranged to coordinate transmission by the first transmitter 904 and operation in RX MIMO or diversity. Thus, when the first transmitter 904 can be set to transmit at a power level up to a threshold where the receiver 920 is capable of blocking the TX signal, RX MIMO or diversity can be enabled. Any TX leakage into the input of the second receiver 920 will then be handled by the second receiver 920, and also by the optional bandpass filter 924. The latter is feasible since there is a distance in frequency between received signal and transmitted signal in FDD. Similarly, when the second transmitter 922 can be set to transmit at a power level up to a threshold where the receiver 902 is capable of blocking the TX signal, TX MIMO or diversity can be enabled. Any TX leakage into the input of the first receiver 902 will then be handled by the first receiver 902, and also by the optional bandpass filter 910. Thus, TX and RX MIMO or diversity is only possible at sufficiently low TX power level. At higher TX power levels, the proper isolation between TX and RX signals is achieved as demonstrated above. A threshold for scheduling the operation can be assigned as discussed in relation to Fig. 7.

Fig. 10 is a block diagram schematically illustrating a communication device 1000 according to an embodiment. The communication device 1000, which can be a mobile terminal, a communication card e.g. in a laptop, controller of a machine or other processing device, or a network node, comprises a transceiver arrangement 1002 as any of those demonstrated above, further signal processing means 1004, and one or more interfaces 1006, e.g. electrical, optical, or user interfaces. The transceiver arrangement 1002 handles wireless communication with cellular communication network nodes, and optionally also other entities in one or more CWS. Inputs and outputs from and to the wireless operations are provided to and from the further signal processing means 1004. The further signal processing means 1004 is enabled to interact through the one or more interfaces 1006.

From the embodiments given above, it is readily understood that arbitration of operation of reception and transmission in communication with a cellular network node, using RX and/or TX MIMO or diversity, and/or operation of CWS transceiver or receiver is given different degrees of freedom to adapt to different signal situations and priorities of operation. The arbitration can include scheduling of operation and/or switching of at least one transmitter output to different selected antennas. The exemplary embodiments given above are for the sake of easier understanding restricted to maximum 2 x 2 MIMO or diversity operation, and to maximum one CWS entity. However, it is from these examples readily understood that the same principles can be used for any n x m MIMO or diversity operation, where n and m are positive integers, and also for two or more present CWS entities, e.g. a solution including one Wi-Fi entity, one Bluetooth entity and one GPS entity. Different methods for such arbitration can thus be employed as will be demonstrated below.

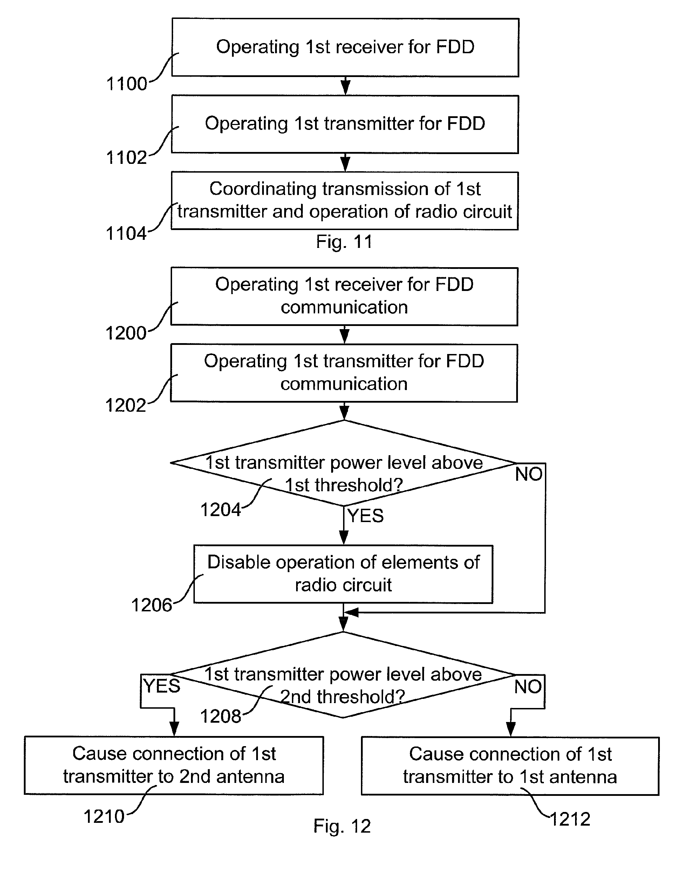

Fig. 11 is a flow chart schematically illustrating a method according to an embodiment. The method includes operating 1100 a first receiver and operating 1102 a first transmitter for FDD communication with a communication network, such as a cellular communication network. The method also includes coordinating 1104 transmissions of the first transmitter with operations of a further radio circuit. The further radio circuit, as demonstrated above, can be a transceiver or receiver for a CWS, a MIMO or diversity receiver for operation with the cellular network, and/or a MIMO or diversity transmitter for operation with the cellular network.

Fig. 12 is a flow chart schematically illustrating a method according to an embodiment. The method includes operating 1200 a first receiver and operating 1202 a first transmitter for FDD communication with a communication network, such as a cellular communication network. The method further includes determining 1204 whether the output power level of the first transmitter is above a first threshold, i.e. having a level where operation of the further radio circuit cannot handle TX signal interference as demonstrated above. If the output power level of the first transmitter is above the first threshold, operation of elements of a further radio circuit is disabled or adapted 1206. It is further determined 1208 whether the transmitter power level is above a second threshold, i.e. having a level where a receiver is not able to block TX signal interference as demonstrated above. If the first transmitter power level is above the second threshold, the first transmitter is connected 1210 to a second antenna, as demonstrated above. If the first transmitter power level does not exceed the second threshold, the first transmitter is connected 1212 to a first antenna, as demonstrated above.

Thus, the coordination can include scheduling of operation of the radio circuit, wherein the scheduling includes disabling operation of elements of the radio circuit when the first transmitter is set to transmit at a power level exceeding the first threshold. Additionally or alternatively, the coordination can include controlling a switch arranged to connect the output of the first transmitter to either the first antenna or to the second antenna, wherein the controlling includes causing connection of the output of the first transmitter, when the first transmitter is set to transmit at a power level exceeding the second threshold, to the second antenna, and causing connection of the output of the first transmitter to the first antenna when the first transmitter is set to transmit at a power level up to the second threshold.

Where a further receiver of the radio circuit is a second receiver arranged for frequency-division duplex communication with the cellular communication network, and where the first and second receivers are arranged to jointly operate receive multiple-input and multiple-output, MIMO, communication or receiver diversity, the method can further comprise disabling 1206 receive MIMO operation or receiver diversity when the first transmitter is set to transmit at a power level exceeding the first threshold and enabling receive MIMO operation when the output of the first transmitter is set to transmit at a power level up to the first threshold.

Where the duplexer-less transceiver comprises a third antenna and a second transmitter arranged for frequency-division duplex communication with the cellular communication network, and where the first and second transmitters are arranged to jointly operate transmit multiple-input and multiple-output, MIMO, communication or transmitter diversity, and a second radio circuit comprises a CWS receiver and/or transmitter, and where the third antenna is connected to the second radio circuit and to the second transmitter, the method can further comprise disabling operation of the second radio circuit when the second transmitter is set to transmit at a power level exceeding a first threshold. Where the duplexer-less transceiver further comprises a switch arranged to connect the output of the first transmitter either to the first antenna or to the second antenna, the method can further comprise controlling the switch by causing 1210 connection of the output of the first transmitter to the second antenna when the first transmitter is set to transmit at a power level exceeding the second threshold and to connect 1212 the output of the first transmitter to the first antenna when the second transmitter is set to transmit at a power level up to the second threshold. Disabling transmit MIMO operation or transmit diversity can be performed when the first or second transmitter is set to transmit at a power level exceeding the second threshold and enabling transmit MIMO operation or transmit diversity when the output of the first or second transmitter is set to transmit at a power level up to the second threshold.

The methods according to the present invention are suitable for implementation with aid of processing means, such as computers and/or processors, especially for the case where the transceiver arrangement is controlled by processing means also for other purposes such as band selection, filter settings, etc. Therefore, there is provided computer programs, comprising instructions arranged to cause the processing means, processor, or computer to perform the steps of any of the methods according to any of the embodiments described with reference to Figs 11 and 12. The computer programs preferably comprises program code which is stored on a computer readable medium 1300, as illustrated in Fig. 13, which can be loaded and executed by a processing means, processor, or computer 1302 to cause it to perform the methods, respectively, according to embodiments of the present invention, preferably as any of the embodiments described with reference to Figs 11 and 12. The computer readable medium 1300 can, as illustrated, be non-transitory. The computer 1302 and computer program product 1300 can be arranged to execute the program code sequentially where actions of the any of the methods are performed stepwise. The processing means, processor, or computer 1302 is preferably what normally is referred to as an embedded system. Thus, the depicted computer readable medium 1300 and computer 1302 in Fig. 13 should be construed to be for illustrative purposes only to provide understanding of the principle, and not to be construed as any direct illustration of the elements.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. A duplexer-less transceiver arrangement (200, 300, 400, 500, 600, 700, 800, 900) comprising
a first receiver (202, 302, 402, 502, 602, 702, 802, 902) arranged for frequency-division duplex communication with a wireless communication network;

a first transmitter (204, 304, 404, 504, 604, 704, 804, 904, 1404) arranged for frequency-division duplex communication with the wireless communication network;
a radio circuit (206, 306, 406, 506, 606, 720, 806, 920) comprising a further receiver and/or a further transmitter;
a first antenna (208, 308, 408, 508, 608, 708, 808, 908) connected to the first receiver (202, 302, 402, 502, 602, 702, 802, 902);
a second antenna (212, 312, 412, 512, 612, 712, 812, 912) connected to the radio circuit (206, 306, 406, 506, 606, 720, 806, 920); and
an arbitrator (216, 316, 416, 516, 616, 716, 816, 916) arranged to coordinate transmission by the first transmitter (204, 304, 404, 504, 604, 704, 804, 904) and operation by the radio circuit (206, 306, 406, 506, 606, 720, 806, 920) such that the first transmitter is enabled to transmit at least through the second antenna (208, 308, 408, 508, 608, 708, 808, 908).

2. The duplexer-less transceiver arrangement according to claim 1, wherein the further radio circuit (206, 306, 406, 506, 606, 806) comprises a receiver and/or transmitter arranged for communication with other entities than the wireless communication network.

3. The duplexer-less transceiver arrangement according to any of claims 1 or 2, wherein the arbitrator (216, 316, 416, 516, 616, 716, 816, 916) is arranged to schedule operation of the radio circuit to disable operation of elements of the radio circuit at least when the first transmitter is set to transmit at a power level exceeding a first threshold.

4. The duplexer-less transceiver arrangement according to any of claims 1 to 3, wherein the arbitrator comprises a switch (316, 616, 716, 816) arranged to connect the output of the first transmitter to the second antenna when the first transmitter is set to transmit at a power level exceeding a second threshold and to connect the output of the first transmitter to the first antenna when the first transmitter is set to transmit at a power level up to the second threshold.

5. The duplexer-less transceiver arrangement according to claim 1, wherein a further receiver of the radio circuit is a second receiver (720, 920) arranged for frequency-division duplex communication with the wireless communication network, wherein the first and second receivers are arranged to jointly operate receive multiple-input and multiple-output, MIMO, communication or receiver diversity.

6. The duplexer-less transceiver arrangement according to claim 5, wherein the arbitrator (716, 916) is arranged to disable receive MIMO operation or receiver diversity when the first transmitter is set to transmit at a power level exceeding a first threshold and to enable receive MIMO operation when the output of the first transmitter is set to transmit at a power level up to the first threshold.

7. The duplexer-less transceiver arrangement according to claim 5 or 6,
wherein the arbitrator comprises a switch (716) arranged to connect the output of the first transmitter to the second antenna when the first transmitter is set to transmit at a power level exceeding a second threshold and to connect the output of the first transmitter to the first antenna when the first transmitter is set to transmit at a power level up to the second threshold.

8. The duplexer-less transceiver arrangement according to any of claims 1 to 7 further comprising
a third antenna (418, 518, 618, 818); and
a second transmitter (404, 504, 604, 804, 1404) arranged for frequency-division duplex communication with the wireless communication network, wherein the first and second transmitters are arranged to jointly operate transmit multiple-input and multiple-output, MIMO, communication or transmitter diversity,
wherein the third antenna is connected to the second transmitter.

9. The duplexer-less transceiver arrangement according to claim 8, further comprising a second radio circuit comprising a further receiver and/or a further transmitter arranged for communication with other entities than the wireless communication network, wherein the third antenna is connected to the second radio circuit and the arbitrator (416, 516, 616, 716, 816) is further arranged to coordinate transmission by the second transmitter and operation by the second radio circuit such that the second transmitter is enabled to transmit at least through the second antenna.

10. The duplexer-less transceiver arrangement according to claim 9, wherein the arbitrator (416, 516, 616, 816) is further arranged to schedule operation of the second radio circuit to disable operation of the second radio circuit at least when the second transmitter is set to transmit at a power level exceeding a first threshold.

11. The duplexer-less transceiver arrangement according to any of claims 9 or 10, wherein the arbitrator comprises a switch (616, 816) arranged to connect the output of the second transmitter to the third antenna when the second transmitter is set to transmit at a power level exceeding a second threshold and to connect the output of the second transmitter to the first antenna when the first transmitter is set to transmit at a power level up to the second threshold.

12. The duplexer-less transceiver arrangement according to any of claims 1 to 7, further comprising
a second transmitter (604, 704, 804, 904, 1404) arranged for frequency-division duplex communication with the wireless communication network, wherein the first and second transmitters are arranged to jointly operate transmit multiple-input and multiple-output, MIMO, communication or transmit diversity,
wherein the first antenna is connected to the second transmitter.

13. The duplexer-less transceiver arrangement according to claim 12, wherein the arbitrator comprises a switch (616, 716, 816) arranged to connect the output of the first transmitter to the second antenna when the first transmitter is set to transmit at a power level exceeding a second threshold and to connect the output of the first transmitter to the first antenna when the second transmitter is set to transmit at a power level up to the second threshold.

14. The duplexer-less transceiver arrangement according to any of claims 1 to 4, further comprising a second transmitter (404, 604, 1404) arranged for frequency-division duplex communication with the wireless communication network, wherein the first and second transmitters are arranged to jointly operate transmit multiple-input and multiple-output, MIMO, communication or transmit diversity, and wherein the duplexer-less transceiver further comprises a third antenna connected to the second transmitter.

15. The duplexer-less transceiver arrangement according to any of claims 8 to 15, wherein the arbitrator (416, 516, 616, 816) is arranged to disable transmit MIMO operation or transmit diversity when the first or second transmitter is set to transmit at a power level exceeding a second threshold and to enable transmit MIMO operation or transmit diversity when the output of the first or second transmitter is set to transmit at a power level up to a second threshold.

16. The duplexer-less transceiver arrangement according to any of claims 1 to 15, wherein the transmitter (204, 304, 404, 504, 604, 704, 804, 904, 922, 1404) comprises an output filter (217, 1417, 1419) arranged to attenuate an output signal of the transmitter at a frequency of a desired received signal.

17. A communication device (1000) comprising a duplexer-less transceiver (1002) according to any of claims 1 to 16.

18. A method of controlling operation of a duplexer-less transceiver comprising a first receiver arranged for frequency-division duplex communication with a wireless communication network, a first transmitter arranged for frequency-division duplex communication with the wireless communication network, a radio circuit comprising a further receiver and/or a further transmitter, a first antenna connected to the first receiver and a second antenna connected to the radio circuit, wherein the method comprises
operating (1100, 1200) the first receiver arranged for frequency-division duplex communication with a wireless communication network;
operating (1102, 1202) the first transmitter arranged for frequency-division duplex communication with the wireless communication network; and
coordinating (1104) transmission by the first transmitter and operation by the radio circuit such that the first transmitter is enabled to transmit at least through the second antenna.

19. The method according to claim 18, wherein the coordination includes scheduling (1204, 1206) of operation of the radio circuit, wherein the scheduling includes disabling (1206) operation of elements of the radio circuit when the first transmitter is set to transmit at a power level exceeding a first threshold.

20. The method according to claim 18 or 19, wherein the coordination includes controlling (1208, 1210, 1212) a switch arranged to connect the output of the first transmitter to either the first antenna or to the second antenna, wherein the controlling includes causing connection (1210) of the output of the first transmitter, when the first transmitter is set to transmit at a power level exceeding a second threshold, to the second antenna, and causing connection (1212) of the output of the first transmitter to the first antenna when the first transmitter is set to transmit at a power level up to the second threshold.

21. The method according to any of claims 18 to 20, wherein a further receiver of the radio circuit is a second receiver arranged for frequency-division duplex communication with the wireless communication network, wherein the first and second receivers are arranged to jointly operate receive multiple-input and multiple-output, MIMO, communication or receiver diversity, the method further comprising disabling (1206) receive MIMO operation or receiver diversity when the first transmitter is set to transmit at a power level exceeding a first threshold and enabling receive MIMO operation when the output of the first transmitter is set to transmit at a power level up to the first threshold.

22. The method according to any of claims 18 to 21, wherein the duplexer-less transceiver further comprises a third antenna, and a second transmitter arranged for frequency-division duplex communication with the wireless communication network, wherein the first and second transmitters are arranged to jointly operate transmit multiple-input and multiple-output, MIMO, communication or transmitter diversity, a second radio circuit comprising a further receiver and/or a further transmitter arranged for communication with other entities than the wireless communication network, wherein the third antenna is connected to the second radio circuit and to the second transmitter, wherein the method further comprises disabling (1206) operation of the second radio circuit when the second transmitter is set to transmit at a power level exceeding a first threshold.

23. The method according to claim 22, wherein the duplexer-less transceiver further comprises a switch arranged to connect the output of the first transmitter either to the first antenna or to the second antenna, wherein the method further comprises controlling the switch by causing connection (1210) of the output of the first transmitter to the second antenna when the first transmitter is set to transmit at a power level exceeding a second threshold and to connect (1212) the output of the first transmitter to the first antenna when the second transmitter is set to transmit at a power level up to the second threshold.

24. The method according to claim 22 or 23, further comprising disabling transmit MIMO operation or transmit diversity when the first or second transmitter is set to transmit at a power level exceeding a second threshold and enabling transmit MIMO operation or transmit diversity when the output of the first or second transmitter is set to transmit at a power level up to a second threshold.

25. A computer program comprising computer-executable code with program instructions, which when executed on a processor of a transceiver arrangement causes the transceiver arrangement to perform the method according to any of claims 18 to 24.

Fig. 1

Fig. 2

Fig. 3

Fig. 4

Fig. 5

Wireless receiver — 602

Wireless Transmitters 1, 2 — 604

600

CWS transceiver — 606

Arbitrator

ctrl — 616

TX 2 low power

TX1

TX 2 high power

Antenna impedance tuner — 614

608 — 610

652

618

650

612

ctrl

RX

TX

Fig. 6

Fig. 7

808

800

810

802

Wireless
Receiver 1

850

816

Arbitrator

TX 2 low
power

TX 2 high
power

ctrl

Wireless
Transmitters
1, 2

Antenna
Impedance
Tuner

812

814

806

ctrl

ctrl

804

TX

CWS transceiver

RX

818

TX 1

820

824

Wireless
Receiver 2

Fig. 8

Fig. 9

Fig. 10

```
┌─────────────────────────────────────┐
│      Operating 1st receiver for FDD  │
└─────────────────────────────────────┘
1100                 │
                     ▼
┌─────────────────────────────────────┐
│     Operating 1st transmitter for FDD│
└─────────────────────────────────────┘
1102                 │
                     ▼
┌─────────────────────────────────────┐
│      Coordinating transmission of 1st│
│ transmitter and operation of radio circuit │
└─────────────────────────────────────┘
1104
```

Fig. 11

```
┌─────────────────────────────────────┐
│      Operating 1st receiver for FDD  │
│             communication            │
└─────────────────────────────────────┘
1200                 │
                     ▼
┌─────────────────────────────────────┐
│    Operating 1st transmitter for FDD │
│             communication            │
└─────────────────────────────────────┘
1202                 │
                     ▼
           ╱───────────────────────╲
          ╱  1st transmitter power   ╲      NO
          ╲  level above 1st threshold? ╱
           ╲───────────────────────╱
            1204          │
                         YES
                          ▼
┌─────────────────────────────────────┐
│      Disable operation of elements of│
│             radio circuit            │
└─────────────────────────────────────┘
1206                 │
                     ▼
           ╱───────────────────────╲
     YES  ╱  1st transmitter power   ╲      NO
         ╱  level above 2nd threshold? ╲
          ╲───────────────────────╱
            1208
         │                              │
         ▼                              ▼
┌─────────────────────┐   ┌─────────────────────┐
│ Cause connection of 1st │   │ Cause connection of 1st │
│ transmitter to 2nd antenna │   │ transmitter to 1st antenna │
└─────────────────────┘   └─────────────────────┘
1210                              1212
```

Fig. 12

Fig. 13

Fig. 14

Fig. 15

Europäisches
Patentamt

European
Patent Office

Office européen
des brevets

## EUROPEAN SEARCH REPORT

Application Number

EP 12 16 3902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2004/162107 A1 (KLEMETTI RAIMO [FI] ET AL) 19 August 2004 (2004-08-19)<br>* paragraph [0016] *<br>* figures 5-8 * | 1,17,18, 25<br>2-4,16, 19,20 | INV.<br>H04B1/00<br>H04B1/52 |
| X | US 2003/176176 A1 (LEINONEN MARKO E [FI] ET AL) 18 September 2003 (2003-09-18)<br>* paragraphs [0061], [0062] *<br>* figures 4,5 * | 1,18,25 | |
| X<br><br>Y | WO 2009/083647 A1 (NOKIA CORP [FI]; LEINONEN MARKO [FI]; ROUSU SEPPO [FI]; VALTANEN JUHA) 9 July 2009 (2009-07-09)<br>* page 5, line 30 - page 6, line 24 *<br>* page 9, line 26 - page 10, line 14 *<br>* page 11, line 3 - page 12, line 16 *<br>* page 13, line 28 - page 14, line 31 *<br>* page 17, line 4 - line 23 *<br>* page 23, line 24 - page 24, line 16 *<br>* page 25, line 15 - page 26, line 30 *<br>* figures 2,3,6 *<br>* figures 5,9,10,11 * | 1,5-16, 21-24<br><br>2,4,20 | |
| Y | US 2009/213764 A1 (CHIU CHINQ-SHIUN [TW] ET AL) 27 August 2009 (2009-08-27)<br>* paragraph [0019] *<br>* figure 2a * | 3,19 | TECHNICAL FIELDS SEARCHED (IPC)<br><br>H04B |
| A | US 2007/111686 A1 (LEE JONG-HYUN [KR]) 17 May 2007 (2007-05-17)<br>* paragraph [0009] *<br>* figure 3 * | 3 | |
| A | EP 1 083 622 A2 (NOKIA CORP [FI]) 14 March 2001 (2001-03-14)<br>* figures 1,2 * | 1,18 | |

-/--

The present search report has been drawn up for all claims

| Place of search | Date of completion of the search | Examiner |
|---|---|---|
| Munich | 12 December 2012 | Avilés Martínez, L |

EPO FORM 1503 03.82 (P04C01)

Europäisches
Patentamt

European
Patent Office

Office européen
des brevets

**EUROPEAN SEARCH REPORT**

Application Number

EP 12 16 3902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2006/085139 A2 (NOKIA CORP [FI]; NOKIA INC [US]; LEINONEN MARKO E [FI]; VALTANEN JUHA) 17 August 2006 (2006-08-17)<br>* paragraph [0047] - paragraph [0049] *<br>* figures 2-4 * | 16 | |
| A | US 6 023 609 A (FUTAMURA KAZUHIRO [JP]) 8 February 2000 (2000-02-08)<br>* column 1, line 52 - column 2, line 22 *<br>* figures 1,2b *<br>* figures 5a,5b * | 16 | |
| X | US 2009/180402 A1 (LINDOFF BENGT [SE] ET AL) 16 July 2009 (2009-07-16)<br>* paragraph [0005] - paragraph [0008] *<br>* paragraph [0056] - paragraph [0060] *<br>* figures 4-9 * | 1,5 | |
| X | EP 2 421 171 A2 (BROADCOM CORP [US]) 22 February 2012 (2012-02-22)<br>* figure 3 *<br>* paragraph [0016] *<br>* paragraph [0027] - paragraph [0037] * | 1,5 | TECHNICAL FIELDS SEARCHED (IPC) |
| A | US 2004/127178 A1 (KUFFNER STEPHEN L [US]) 1 July 2004 (2004-07-01)<br>* the whole document * | 1-25 | |
| A | EP 0 771 082 A2 (MATSUSHITA ELECTRIC IND CO LTD [JP]) 2 May 1997 (1997-05-02)<br>* figures 1-6 * | 1-25 | |
| A | EP 2 234 276 A2 (LG ELECTRONICS INC [KR]) 29 September 2010 (2010-09-29)<br>* paragraph [0033] - paragraph [0036] *<br>* paragraph [0013] *<br>* figures 2,3,4,6,7 * | 1-25 | |

The present search report has been drawn up for all claims

| Place of search | Date of completion of the search | Examiner |
|---|---|---|
| Munich | 12 December 2012 | Avilés Martínez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 12 16 3902

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 12 16 3902

The Search Division considers that the present European patent application does not comply with the requirements of unity of invention and relates to several inventions or groups of inventions, namely:

1. claims: 1-4, 16-20, 25

   A duplexer-less transceiver arrangement comprising a first receiver and a first transmitter for frequency division duplex with a network, a radio circuit, a first antenna connected to the first receiver, a second antenna connected to the radio circuit and an arbitrator for coordinating the operation of the transceiver arrangement.
   ---

2. claims: 5-7, 21

   The duplexerless arrangement of claim 1 wherein the radio circuit comprises a receiver for frequency division duplex communication and wherein the first and second receivers are arranged to jointly operate MIMO communication or receiver diversity.
   ---

3. claims: 8-15, 22-24

   The duplexerless arrangement of claim 1 further comprising a second transmitter arranged for frequency division duplex communication and wherein the first and second transmitters are arranged to operate MIMO communication or transmitter diversity and wherein the first antenna is connected to the second transmitter.
   ---

## ANNEX TO THE EUROPEAN SEARCH REPORT
## ON EUROPEAN PATENT APPLICATION NO.

EP 12 16 3902

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2012

| Patent document cited in search report | | Publication date | Patent family member(s) | | Publication date |
|---|---|---|---|---|---|
| US 2004162107 | A1 | 19-08-2004 | FI | 20030227 A | 15-08-2004 |
| | | | GB | 2400523 A | 13-10-2004 |
| | | | US | 2004162107 A1 | 19-08-2004 |
| US 2003176176 | A1 | 18-09-2003 | NONE | | |
| WO 2009083647 | A1 | 09-07-2009 | CN | 101911520 A | 08-12-2010 |
| | | | EP | 2235841 A1 | 06-10-2010 |
| | | | US | 2011045786 A1 | 24-02-2011 |
| | | | WO | 2009083647 A1 | 09-07-2009 |
| US 2009213764 | A1 | 27-08-2009 | CN | 101521520 A | 02-09-2009 |
| | | | TW | 200937882 A | 01-09-2009 |
| | | | US | 2009213764 A1 | 27-08-2009 |
| | | | US | 2010271987 A1 | 28-10-2010 |
| US 2007111686 | A1 | 17-05-2007 | KR | 20070052042 A | 21-05-2007 |
| | | | US | 2007111686 A1 | 17-05-2007 |
| EP 1083622 | A2 | 14-03-2001 | AT | 301888 T | 15-08-2005 |
| | | | DE | 60021813 D1 | 15-09-2005 |
| | | | DE | 60021813 T2 | 01-06-2006 |
| | | | EP | 1083622 A2 | 14-03-2001 |
| | | | JP | 4387041 B2 | 16-12-2009 |
| | | | JP | 2001024579 A | 26-01-2001 |
| | | | US | 6560443 B1 | 06-05-2003 |
| WO 2006085139 | A2 | 17-08-2006 | EP | 1829229 A2 | 05-09-2007 |
| | | | KR | 20070094010 A | 19-09-2007 |
| | | | US | 2007082622 A1 | 12-04-2007 |
| | | | WO | 2006085139 A2 | 17-08-2006 |
| US 6023609 | A | 08-02-2000 | CN | 1199281 A | 18-11-1998 |
| | | | JP | 10313226 A | 24-11-1998 |
| | | | US | 6023609 A | 08-02-2000 |
| US 2009180402 | A1 | 16-07-2009 | AT | 552666 T | 15-04-2012 |
| | | | EP | 2235868 A2 | 06-10-2010 |
| | | | US | 2009180402 A1 | 16-07-2009 |
| | | | WO | 2009090170 A2 | 23-07-2009 |
| EP 2421171 | A2 | 22-02-2012 | CN | 102427373 A | 25-04-2012 |
| | | | EP | 2421171 A2 | 22-02-2012 |
| | | | KR | 20120017011 A | 27-02-2012 |
| | | | TW | 201220726 A | 16-05-2012 |
| | | | US | 2012044919 A1 | 23-02-2012 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 12 16 3902

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2012

| Patent document cited in search report | | Publication date | Patent family member(s) | | Publication date |
|---|---|---|---|---|---|
| US 2004127178 | A1 | 01-07-2004 | AU | 2003299567 A1 | 29-07-2004 |
| | | | US | 2004127178 A1 | 01-07-2004 |
| | | | WO | 2004062126 A1 | 22-07-2004 |
| EP 0771082 | A2 | 02-05-1997 | CA | 2188509 A1 | 28-04-1997 |
| | | | CN | 1152220 A | 18-06-1997 |
| | | | DE | 69627103 D1 | 08-05-2003 |
| | | | DE | 69627103 T2 | 19-02-2004 |
| | | | EP | 0771082 A2 | 02-05-1997 |
| | | | JP | 3382764 B2 | 04-03-2003 |
| | | | JP | 9130293 A | 16-05-1997 |
| | | | US | 5913153 A | 15-06-1999 |
| EP 2234276 | A2 | 29-09-2010 | CN | 101848058 A | 29-09-2010 |
| | | | EP | 2234276 A2 | 29-09-2010 |
| | | | JP | 5016077 B2 | 05-09-2012 |
| | | | JP | 2010213275 A | 24-09-2010 |
| | | | KR | 20100100642 A | 15-09-2010 |
| | | | US | 2010227639 A1 | 09-09-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Adaptive Duplexer for Software Radio. **KANNANGA-RA, S.D.** PhD Thesis. 2006